(19) 

(11) **EP 4 618 530 B1**

(12) **EUROPEAN PATENT SPECIFICATION**

(45) Date of publication and mention of the grant of the patent:
**12.08.2026 Bulletin 2026/33**

(21) Application number: **25157476.0**

(22) Date of filing: **12.02.2025**

(51) International Patent Classification (IPC):
***H04N 7/18*** *(2006.01)* ***G06F 3/01*** *(2006.01)*

(52) Cooperative Patent Classification (CPC):
**H04N 7/188; G06T 11/60**

(54) **REMOTE SUPPORT DEVICE AND REMOTE SUPPORT METHOD**

FERNUNTERSTÜTZUNGSVORRICHTUNG UND FERNUNTERSTÜTZUNGSVERFAHREN

DISPOSITIF DE SUPPORT À DISTANCE ET PROCÉDÉ DE SUPPORT À DISTANCE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.03.2024 JP 2024037413**

(43) Date of publication of application:
**17.09.2025 Bulletin 2025/38**

(73) Proprietor: **TOYOTA JIDOSHA KABUSHIKI KAISHA**
**Aichi-Ken 471-8571 (JP)**

(72) Inventors:
- **SUDA, Rio**
  **Toyota-shi, 471-8571 (JP)**
- **TAMAGAWA, Shuichi**
  **Toyota-shi, 471-8571 (JP)**
- **AKATSUKA, Kosuke**
  **Toyota-shi, 471-8571 (JP)**

(74) Representative: **D Young & Co LLP**
**3 Noble Street**
**London EC2V 7BQ (GB)**

(56) References cited:
**US-A1- 2011 066 262**
**US-A1- 2019 361 436**
**US-A1- 2021 381 197**
**US-A1- 2022 321 841**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 618 530 B1

## Description

### TECHNICAL FIELD

The present disclosure relates to a technique for remotely supporting a mobile vehicle using an image acquired by a camera mounted on the mobile vehicle.

### BACKGROUND

JP2022159912A discloses a system for remotely monitoring a vehicle. In this system of the related art, first data and second data are separately transmitted from the vehicle to a remote server. The first data includes an image (a camera image) acquired by a camera mounted on the vehicle and acquisition timing of the camera image. The second data includes an object recognition result based on the camera image and an acquisition timing of the camera image. In the remote server, based on the acquisition timing of the camera image included in the first and second data, the camera image acquired at the same timing and the object recognition result based on the camera image are extracted in time series. Then, a synthetic image in which the object recognition result is superimposed on the extracted camera image is output from a remote monitoring screen.

US 2022/321841 A1 discloses detection of the objects in the image and transmitting the detected object information together with the image data to the remote server in order to create a superimposed screen of object data over the image data. It provides methods for synchronising the image acquisition and object detection results.

US 2019/361436 A1 discloses a system for displaying detected objects and surround image of a remotely operating vehicle wherein the overlapped interface also display the estimated position of the vehicle corrected for the transmission and processing delays.

US 2011/066262 A1 discloses compensating time latency of the video display for a teleoperation system.

US 2021/381197 A1 is a remote operation device including an image generating section that generates a composite image prioritising the display of the image in the line of sight of the operator.

In the system of the related art, a difference between the acquisition timing of the camera image and a timing at which the camera image can be processed by the remote server can be said to be a delay time of the camera image. The delay time of the camera image includes a time required for communication between the vehicle and the remote server and a time required for processing executed in the vehicle. The problem here is that, when a movement amount of the vehicle within the delay time of the camera image is large, surrounding environment of the vehicle shown in the synthetic image may deviate from actual surrounding environment. In this case, accuracy of information output from the remote monitoring screen will be reduced.

The present disclosure has been made in view of the above problems. An object of the present disclosure is to provide a technique for suppressing a deviation of an actual surrounding environment from a surrounding environment of a mobile vehicle indicated in a synthetic image in a case where a camera image and an object recognition result are separately received from the mobile vehicle and remote support of the mobile vehicle is performed.

### SUMMARY

A first aspect of the present disclosure is a device for remotely supporting a mobile vehicle and has the following features.

The device remotely supports a mobile vehicle by outputting a synthetic image in which annotation information about an object to be noted in an image is superimposed on the image obtained by a camera mounted on the mobile vehicle from a display device.

The device includes a communication circuitry and a processing circuitry. The communication circuitry is connected to the mobile vehicle via a communication network. The processing circuitry is coupled to the communication circuitry.

The communication circuitry is configured to: receive, from the mobile vehicle, image data obtained by encoding the image and information on acquisition timing of the image by the camera; and receive, from the mobile vehicle, object data including recognition information on an object in the image separately from the image data.

The processing circuitry is configured to: predict a movement amount of the mobile vehicle in an image delay time indicating a timing difference between an acquisition timing of the image included in the image data and a decoding timing of the image data by the processing circuitry; set a mobile vehicle adjustment time equal to or less than the image delay time when the predicted movement amount of the mobile vehicle exceeds a movement threshold; and generate the synthetic image by projection transformation of the image included in the image data into a future image obtained at a camera viewpoint later than the acquisition timing of the image by the mobile vehicle adjustment time based on information regarding a movement of the mobile vehicle when the predicted movement amount of the mobile vehicle exceeds the

movement threshold.

A second aspect of the present disclosure is a method for remotely supporting a mobile vehicle and has the following features.

The method includes remotely supporting the mobile vehicle by outputting, from a display device, a synthetic image in which annotation information about an object to be noted in an image is superimposed on the image obtained by a camera mounted in the mobile vehicle.

The method includes: receiving from the mobile vehicle image data in which the image and information on acquisition timing of the image by the camera are encoded from the mobile vehicle; receiving object data including recognition information on an object in the image from the mobile vehicle separately from the image data; predicting a movement amount of the mobile vehicle at an image delay time indicating a timing difference between an acquisition timing of the image included in the image data and a decoding timing of the image data; setting a mobile vehicle adjustment time equal to or less than the image delay time when the predicted movement amount of the mobile vehicle exceeds a movement threshold; and generating the synthetic image by projection transforming the image included in the image data into a future image obtained at a camera viewpoint later than the acquisition timing of the image by the mobile vehicle adjustment time based on information regarding a movement of the mobile vehicle when the predicted movement amount of the mobile vehicle exceeds a movement threshold.

According to the present disclosure, when the predicted movement amount of the mobile vehicle at the image delay time exceeds the movement threshold, the projection transformation of the image is performed. According to the projection transformation of the image, a future image is obtained at a camera viewpoint that is ahead of the acquisition timing of the image by the mobile vehicle adjustment time. Therefore, for example, by setting a movement threshold corresponding to the movement amount at which it is expected that a deviation occurs between the actual surrounding environment and the surrounding environment of the mobile vehicle indicated in the synthetic image, it is possible to suppress the deviation from occurring by the projection transformation performed when the predicted movement amount of the mobile vehicle is large.

## BRIEF DESCRIPTION OF DRAWINGS

FIG. 1 is a schematic diagram illustrating a configuration example of a remote support system;

FIG. 2 is a diagram illustrating an example of data transmission from a vehicle to a remote operator terminal;

FIG. 3 is a diagram illustrating an example of a synthetic image output from a display device;

FIG. 4 is a diagram for illustrating a delay time of an image and a delay time of an object;

FIG. 5 is a conceptual diagram for illustrating an outline of movement adjustment processing of the vehicle;

FIG. 6 is a conceptual diagram for illustrating projection transformation based on perspective projection transformation;

FIG. 7 is a diagram illustrating an example of a synthetic image output from a display device when the movement adjustment processing of the vehicle is performed;

FIG. 8 is a diagram illustrating a first example of the mobile vehicle adjustment time;

FIG. 9 is a diagram illustrating a second example of the mobile vehicle adjustment time;

FIG. 10 is a diagram illustrating a third example of the mobile vehicle adjustment time;

FIG. 11 is a conceptual diagram for illustrating an outline of movement adjustment processing of a moving body;

FIG. 12 is a diagram illustrating an example of a synthetic image output from a display device when the movement adjustment processing of the moving body is performed;

FIG. 13 is a diagram for illustrating a case where the movement adjustment processing of the vehicle and the movement adjustment processing of the moving body are combined;

FIG. 14 is a block diagram illustrating a configuration example of a vehicle; and

FIG. 15 is a block diagram illustrating an example of a configuration of a remote operator terminal.


## DESCRIPTION OF EMBODIMENT

An embodiment of the present disclosure will be described with reference to the accompanying drawings.

### 1. Remote support system

A remote support (a remote driving) of a mobile vehicle will be considered. Examples of the mobile vehicle to be remotely supported include a vehicle, a robot, and a flying object. The vehicle may be an autonomous driving vehicle, or a vehicle driven by a driver. Examples of the robot include a logistics robot and a work robot. Examples of the flying object

include a drone or the like. As an example, in the following description, a case where the mobile vehicle is a vehicle will be considered. In the case of generalization, "vehicle" in the following description is replaced with "mobile vehicle".

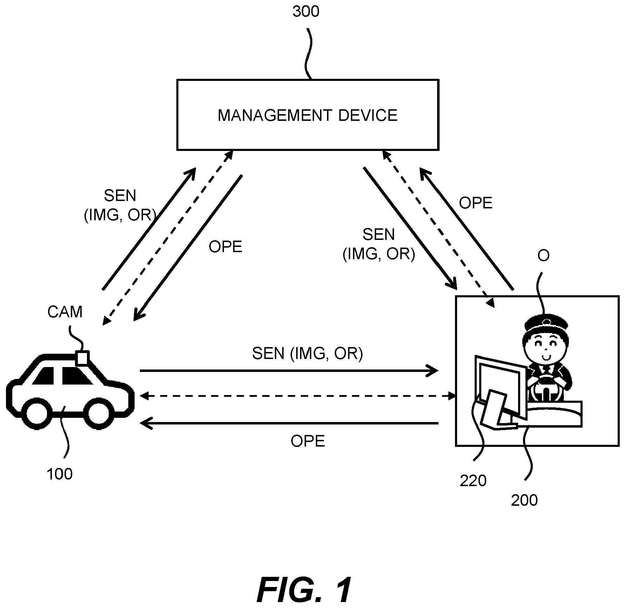

FIG. 1 is a schematic diagram illustrating a configuration example of a remote support system 1 according to the present embodiment. The remote support system 1 includes a vehicle 100, a remote operator terminal 200, and a management device 300. The vehicle 100 is a target of the remote support. The remote operator terminal 200 is a terminal device used when a remote operator O remotely supports the vehicle 100. The remote operator terminal 200 may be referred to as a remote support human machine interface (HMI). The management device 300 manages the remote support system 1. Typically, the management device 300 is a management server on a cloud. The management server may be configured by a plurality of servers that perform distributed processing.

The vehicle 100, the remote operator terminal 200, and the management device 300 can communicate with each other via a communication network. The vehicle 100 and the remote operator terminal 200 may communicate with each other through the management device 300. The vehicle 100 and the remote operator terminal 200 may directly communicate with each other without the management device 300.

Various sensors including a camera CAM are mounted on the vehicle 100. The camera CAM captures an image of surroundings of the vehicle 100 and acquires an image IMG showing a situation around the vehicle 100. Information on sensor detection SEN includes information obtained by the various sensors. The information on sensor detection SEN includes at least the image IMG captured by the camera CAM and recognition information OR on an object to be noted in the image IMG. The information on sensor detection SEN may include a position and a state (e.g., speed, steering angle, etc.) of the vehicle 100. The vehicle 100 transmits information on sensor detection SEN to the remote operator terminal 200.

The remote operator terminal 200 receives the information on sensor detection SEN transmitted from the vehicle 100. The remote operator terminal 200 presents the information on sensor detection SEN to the remote operator O. Specifically, the remote operator terminal 200 includes a display device 220, and displays information such as the image IMG on the display device 220. The remote operator O recognizes the situation around the vehicle 100 by viewing the displayed information, and performs the remote support of the vehicle 100. That is, the remote support of the vehicle 100 by the remote operator O is performed by displaying the information on the remote operator O on the display device 220.

Remote support information OPE is information on the remote support by the remote operator O. For example, the remote support information OPE includes an operation amount by the remote operator O. The remote operator terminal 200 transmits the remote support information OPE to the vehicle 100. The vehicle 100 receives the remote support information OPE transmitted from the remote operator terminal 200. The vehicle 100 performs vehicle travel control in accordance with the received remote support information OPE. In this way, the remote support of the vehicle 100 is realized.

2. Generation processing of synthetic image

In the present embodiment, a synthetic image SIMG is generated in the remote operator terminal 200. The synthetic image SIMG is generated based on the image IMG included in the information on sensor detection SEN and the recognition information OR on the object to be noted in the image IMG. The image IMG and the recognition information OR are separately transmitted from the vehicle 100 to the remote operator terminal 200.

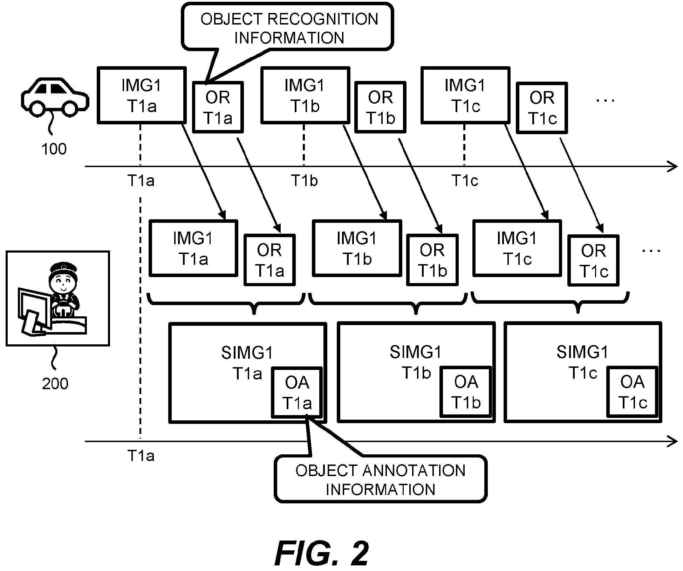

FIG. 2 is a diagram illustrating an example of transmission of the image IMG and the recognition information OR from the vehicle 100 to the remote operator terminal 200. Image data including a set of images IMG (i.e., video) acquired within a certain time is transmitted from the vehicle 100 to the remote operator terminal 200. The certain time corresponds to a transmission interval of the image data. In the example shown in FIG. 2, the set of images IMG1 acquired at the timing T1 includes images IMG1 (T1a), IMG1 (T1b), and IMG1 (T1c). The images IMG1 (T1a), IMG1 (T1b) and IMG1 (T1c) are acquired at the timings T1a, T1b, and T1c, respectively.

The recognition processing of the object is performed on each of the images IMG1 (T1a), IMG1 (T1b) and IMG1 (T1c). For the recognition processing, an image analysis technique such as pattern matching or deep learning is used. When the recognition processing is performed, recognition information OR (T1a), OR (T1b) and OR (T1c) are generated. The recognition information OR includes timing (e.g., a time stamp) at which the image IMG1 subjected to the recognition processing is acquired by the camera CAM. When an object to be noted is recognized in the image IMG1, coordinates, size, and type of the object in the image IMG1 are added to the recognition information OR. That is, when the object to be noted is not recognized in the image IMG1, the recognition information OR includes only the timing information (the time stamp).

The object data including the recognition information OR is transmitted from the vehicle 100 to the remote operator terminal 200. The transmission of the object data is performed each time the recognition information OR is generated. The transmission of the object data may be performed at regular time intervals. The regular time corresponds to a transmission interval of the object data.

The remote operator terminal 200 that has received the image data, and the object data arranges the images

IMG1 (i.e., the images IMG1 (T1a), IMG1 (T1b), and IMG1 (T1c)) in chronological order based on the timing (the time stamp) at which the images IMG1 included in the image data are acquired by the camera CAM. The remote operator terminal 200 also specifies an image IMG1 to be combined with the recognition information OR based on the timing (the time stamp) included in the recognition information OR on the object.

The remote operator terminal 200 further refers to the coordinates, size, and type of the object included in the recognition information OR on the object, and superimposes annotation information OA on the image IMG1 to be combined with the object. The annotation information OA is information indicating the position, size, and type of the object in the image IMG1. The information indicating the position and size of the object is a bounding box surrounding the object. The information indicating the type of the object is a character indicating the type.

The annotation information OA is superimposed on the image IMG1, and thus the synthetic image SIMG1 is generated. Since the original images IMG1 (i.e., the images IMG1 (T1a), IMG1 (T1b), and IMG1 (T1c)) of the synthetic image SIMG1 are arranged in chronological order, a set of the synthetic image SIMG1 (i.e., the video) is output from the display device 220 by outputting the synthetic image in chronological order.

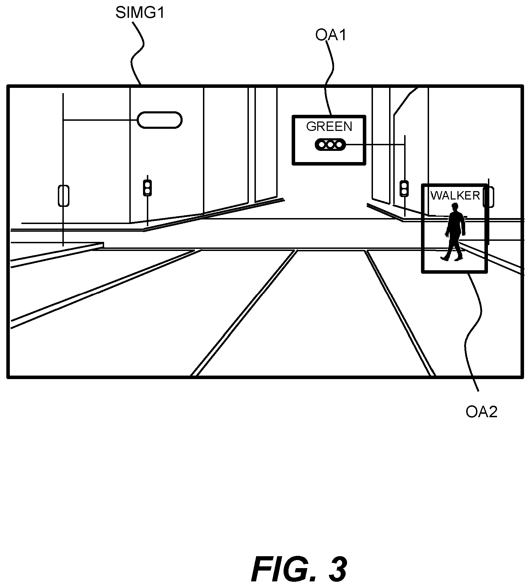

FIG. 3 is a diagram showing an example of the synthetic image SIMG output from the display device 220. In the example shown in FIG. 3, annotation information OA1 and OA2 are output. The annotation information OA1 is a bounding box surrounding a green light and characters "green light". The annotation information 2 is a bounding box surrounding a walker and characters "walker".

3. Processing using projection transformation

3-1. Movement adjustment processing of the vehicle 100

The remote support of the vehicle 100 is accompanied by a delay between the vehicle 100 and the remote operator terminal 200. A difference between the timing T1 at which the image IMG1 is acquired by the camera CAM and the timing at which the image IMG1 is able to be processed by the remote operator terminal 200 can be said to be a delay time of the image. Further, a difference between the timing T1 at which the image IMG1 in which the object to be noted is recognized is acquired by the camera CAM and the timing at which the recognition information OR is able to be processed by the remote operator terminal 200 can be said to be a delay time of the object.

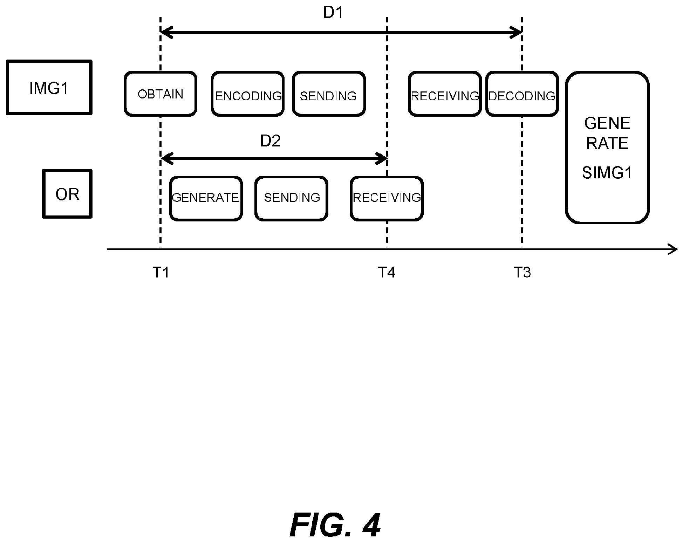

FIG. 4 is a diagram for illustrating the delay time of the image and the delay time of the object. In the example shown in FIG. 4, after the image IMG1 is acquired at the timing T1, it is encoded and then sent to the remote operator terminal 200. The reason for encoding the image is to reduce the communication cost. In order for the encoded image IMG1 to be processed by the remote operator terminal 200, the image IMG1 needs to be decoded. Therefore, the delay time of the image is represented as a timing difference D1 (=T3-T1) between a timing T3 at which the remote operator terminal 200 decodes the image IMG1 and the timing T1.

On the other hand, the recognition information OR is transmitted to the remote operator terminal 200 after being generated. Therefore, the recognition information OR is able to be processed by the remote operator terminal 200 at a timing T4 when the remote operator terminal 200 receives the recognition information OR. Therefore, the delay time of the object is represented as a timing difference D2 (=T4-T1) between the timing T4 and the timing T1.

When attention is paid to a delay time of the image (i.e., the timing difference D1) , the following problem is considered. That is, when a movement amount of the vehicle 100 in the timing difference D1 (which refers to a movement amount of at least one of the longitudinal direction and the horizontal direction, the same applies hereinafter) is large, the surrounding environment of the vehicle 100 indicated in the synthetic image SIMG1 may deviate from actual surrounding environment.

Therefore, in the present embodiment, the image IMG1 is visually adjusted in consideration of the movement amount of the vehicle 100 in the delay time (timing difference D1) of the image IMG1. In particular, the remote support system 1 according to the present embodiment visually adjusts the image IMG1 by using "projection transformation". The subject of the movement adjustment processing is, for example, the remote operator terminal 200. However, the subject of the movement adjustment processing is not limited to the remote operator terminal 200. At least a part of the movement adjustment processing may be executed by the vehicle 100 or the management device 300.

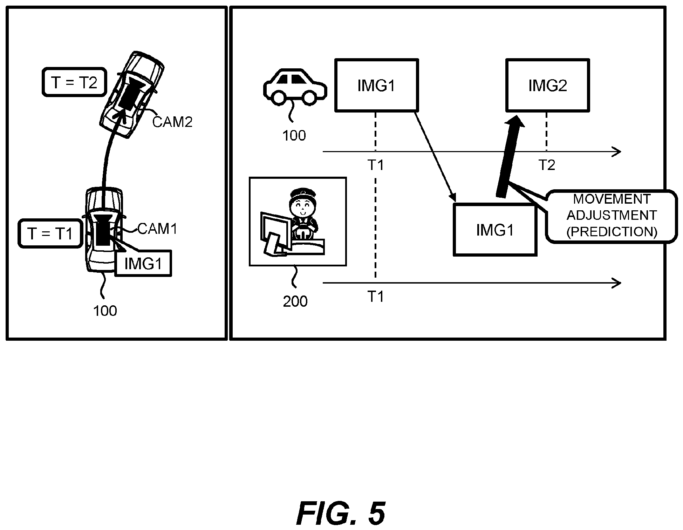

FIG. 5 is a conceptual diagram for illustrating an outline of the movement adjustment processing of the vehicle 100 by the remote support system 1. The image IMG1 is an image IMG actually captured at the timing T1 by the camera CAM mounted on the vehicle 100. The image IMG1 is transmitted from the vehicle 100 to the remote operator terminal 200. The remote operator terminal 200 acquires the image IMG1 after the timing T1. If an image IMG that will be captured in the future can be predicted from the image IMG1, the surrounding environment of the vehicle 100 can be adjusted.

The timing T2 is a timing that is a target of the prediction, and is a timing after the timing T1. A difference between the timing T2 and the timing T1 corresponds to a movement adjustment time (a mobile vehicle adjustment time) of the vehicle 100. The remote support system 1 predicts the movement amount of the vehicle 100 in the timing difference D1 shown in FIG. 4. The predicted movement amount Lv of the vehicle 100 is calculated using, for example, a following

formula.

$$\text{(longitudinal direction) delay time D1*speed v(T1) of the vehicle 100}$$

(horizontal direction) delay time D1^2*lateral acceleration Gy(T1) of the vehicle 100*0.5

The lateral acceleration Gy used for the predicted movement amount Lv in the horizontal direction may be estimated using the steering angle MA(T1) and the speed v(T1) (Gy(T1)=MA(T1)*v(T1)).

When the predicted movement amount Lv exceeds a movement threshold THLv, the remote support system 1 sets a time $\alpha$ equal to or less than the timing difference D1 shown in FIG. 4 as the "mobile vehicle adjustment time" and performs the movement adjustment. Note that the movement threshold THLv may be set in advance as a movement amount at which a deviation is expected to occur between the actual surrounding environment and the surrounding environment of the vehicle 100 indicated in the synthetic image SIMG1.

For convenience, the camera CAM at the timing T1 is referred to as a first camera CAM1, and the camera CAM at the timing T2 is referred to as a second camera CAM2. A first viewpoint is a viewpoint of the first camera CAM1 and is defined by a combination of the position and the direction of the first camera CAM1 at the timing T1. A second viewpoint is a viewpoint of the second camera CAM2 and is defined by a combination of the position and the direction of the second camera CAM2 predicted at the timing T2.

The remote support system 1 acquires camera information CINF regarding the camera CAM mounted on the vehicle 100. The camera information CINF includes installation information and performance information on the camera CAM. The installation information indicates an installation position and an installation orientation of the camera CAM in a vehicle coordinate system. The performance information indicates a focal length, an angle of view, and the like of the camera CAM. Since the camera CAM is fixed to the vehicle 100, a movement direction and a movement amount of the vehicle 100 can be converted into the movement direction and the movement amount of the camera CAM in the camera coordinate system by using the installation information on the camera CAM. That is, a change in viewpoints of the camera CAM can be estimated based on the installation information on the camera CAM and the movement direction and the movement amount of the vehicle 100.

The remote support system 1 also calculates a difference between the first viewpoint and the second viewpoint based on the camera information CINF (the installation information) and the predicted movement amount Lv.

The image IMG1 can be said to be an image IMG captured from the first viewpoint, that is, an image IMG viewed from the first viewpoint. An image IMG expected to be captured from the second viewpoint, that is, the image IMG expected to be viewed from the second viewpoint is hereinafter referred to as an "image IMG2". The remote support system 1 converts the image IMG1 viewed from the first viewpoint into the image IMG2 viewed from the second viewpoint based on the difference between the first viewpoint and the second viewpoint. In other words, the remote support system 1 predicts the image IMG2 viewed from the second viewpoint based on the image IMG1 viewed from the first viewpoint. Projection transformation is used for this prediction.

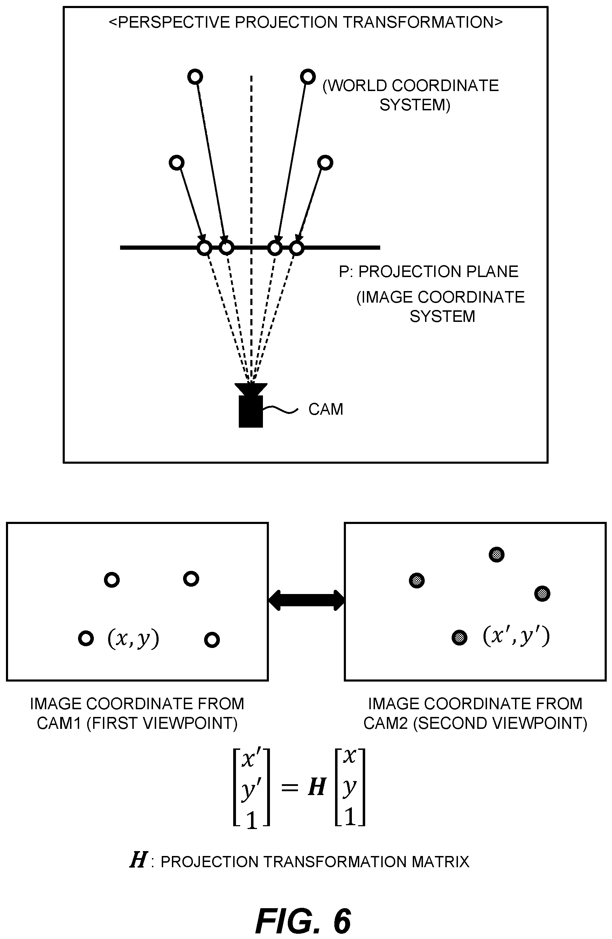

FIG. 6 is a conceptual diagram for illustrating the projection transformation. The projection transformation is performed based on the perspective projection transformation. The perspective projection transformation is a rendering method for drawing an object in a three-dimensional space on a two-dimensional plane as viewed from the camera CAM. For that purpose, the perspective projection transformation projects the points in the three-dimensional space onto the projection plane P, taking into account the viewpoint of the camera CAM. The projection plane P is associated with the camera CAM. For example, the projection plane P is a plane orthogonal to the optical axis of the camera CAM. Note that a point in the three-dimensional space is defined in a three-dimensional world coordinate system (absolute coordinate system). On the other hand, the point projected on the projection plane P is defined in a two-dimensional image coordinate system.

For example, N virtual points are virtually set in the three-dimensional world coordinate system. N is an integer of 4 or more. The N virtual points when viewed from the first camera CAM1 (the first viewpoint) are projected to a first projection P1 associated with the first camera CAM1 by the perspective projection transformation. In addition, the N virtual points when viewed from the second CAM2 (the second viewpoint) are projected to a second projection plane P2 associated with the second camera CAM2 by the perspective projection transformation. The second viewpoint is obtained from the difference between the first viewpoint and the second viewpoint. Image coordinates of a virtual point on the first projection plane P1 as viewed from the first camera CAM1 (the first viewpoint) are given by [x, y]. On the other hand, image coordinates of a virtual point on the second projection plane P2 as viewed from the second camera CAM2 (the second viewpoint) are given by [x', y']. Based on the comparison between the two image coordinates, a projection transformation matrix H for transforming the first viewpoint to the second viewpoint is calculated. Then, the projection transformation matrix H is applied to an entire of the image CAM1 actually captured by the first camera IMG1, thereby generating the

image IMG2 expected to be viewed from the second viewpoint.

As another example, a method described in a non-patent literature (Koudai Matsubara and Manabu Omae, "Compensation of Camera Image Latency in Remotely Operated Vehicle using Projection Transformation", 19th ITS Symposium 2021,4-A-12, December 2021) may be used. In particular, each image coordinate point on an image IMG1 (a projection plane P) is transformed into a world coordinate point in the world coordinate system by an inverse transformation of the perspective projection transformation. Based on the difference between the first viewpoint and the second viewpoint, the world coordinate point viewed from the first viewpoint is converted into the world coordinate point viewed from the second viewpoint. Then, the world coordinate point viewed from the second viewpoint is returned onto the projection plane P by perspective projection transformation. Thus, an image IMG2 expected to be viewed from the second viewpoint is generated. According to the non-patent literature, it is assumed that what is reflected in the entire image IMG is the ground surface S as shown in FIG. 6.

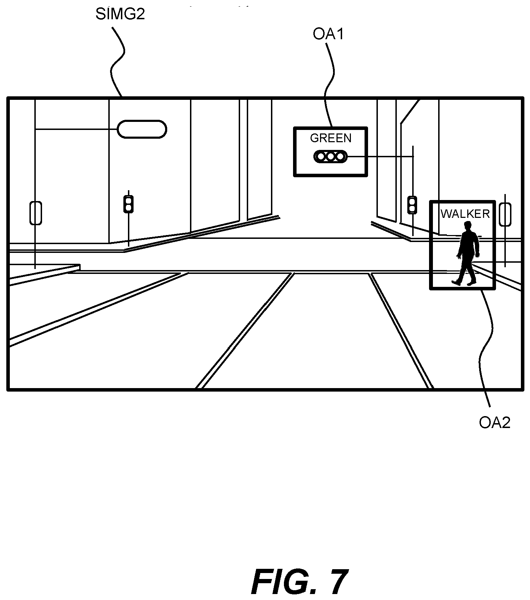

FIG. 7 is a diagram illustrating an example of the synthetic image SIMG output from the display device 220 when the movement adjustment processing of the vehicle 100 is performed. The annotation information OA1 and OA2 shown in FIG. 7 are the same as those described in FIG. 3. What is important in the description of FIG. 7 is that the synthetic image SIMG2 is generated based on the image IMG2. The synthetic image SIMG2 is generated when the predicted movement amount Lv exceeds the movement threshold THLv. Therefore, by outputting the synthetic image SIMG2 from the display device 220, even when the movement amount of the vehicle 100 at the delay time of the image is large, the surrounding environment of the vehicle 100 indicated in the synthetic image SIMG2 can be made closer to the actual surrounding environment.

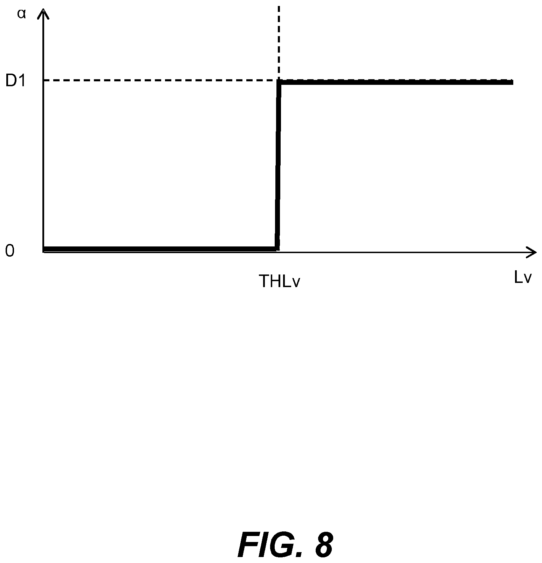

FIGS. 8 to 10 are diagrams illustrating first to third examples of the mobile vehicle adjustment time. In the first example shown in FIG. 8, the time $\alpha$ (the mobile vehicle adjustment time) is set to a time equal to the timing difference D1. However, in the first example, when the predicted movement amount Lv changes so as to straddle the movement threshold THLv, the execution of the movement adjustment processing is switched. Therefore, the synthetic image SIMG may be greatly changed before and after the execution of the movement adjustment processing, and the image of the surrounding environment of the vehicle 100 becomes unstable.

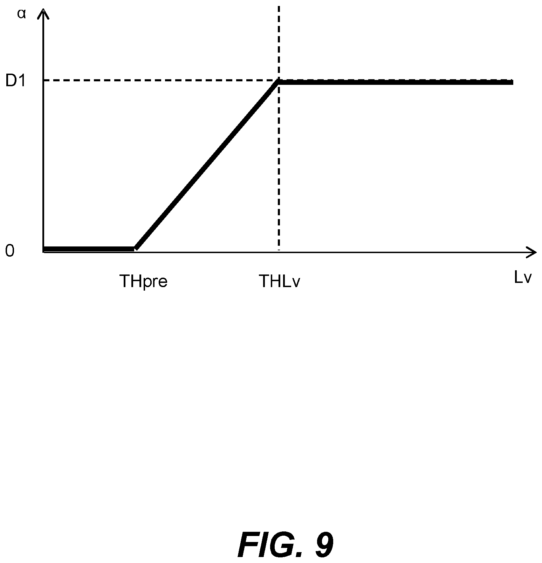

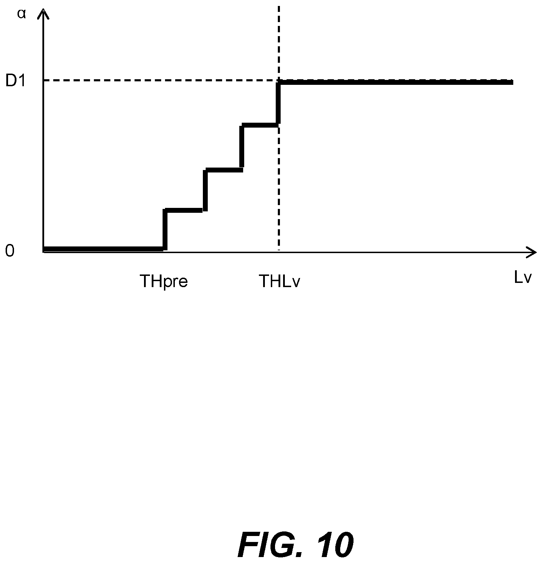

In contrast, in the second example shown in FIG. 9 and the third example shown in FIG. 10, the time $\alpha$ is set and the movement adjustment processing is performed when the predicted movement amount Lv exceeds a preliminary threshold (a projection transformation threshold) THpre (<THLv). In the second and third examples, the time $\alpha$ is gradually changed (monotonic non-decreasing) from zero to the timing difference D1 from the preliminary threshold THpre to the moving threshold THLv. Therefore, the image of the surrounding environment of the vehicle 100 can be stabilized before and after the execution of the movement adjustment processing.

3-2. Movement adjustment processing of a moving body

In this section, the delay time (the timing difference D2 in FIG. 4) of the object is focused. The problem regarding the delay time of the image (that is, the timing difference D1 in FIG. 4) described in the section 3-1 is also considered when the object included in the synthetic image SIMG is a moving body. That is, in a case where the object is a moving body such as a walker, bicycle, or another vehicle, when the relative movement amount of the moving body with respect to the vehicle 100 in the timing difference D2 (which refers to the relative movement amount in at least one of the longitudinal direction and the horizontal direction, the same applies hereinafter) is large, the position and size of the moving body in the synthetic image SIMG1 may deviate greatly from the actual position and size of the moving body. Therefore, in the embodiment, the "projection transformation" is performed also on the image of the moving body included in the image D2 in consideration of the relative movement amount of the moving body in the timing difference IMG1.

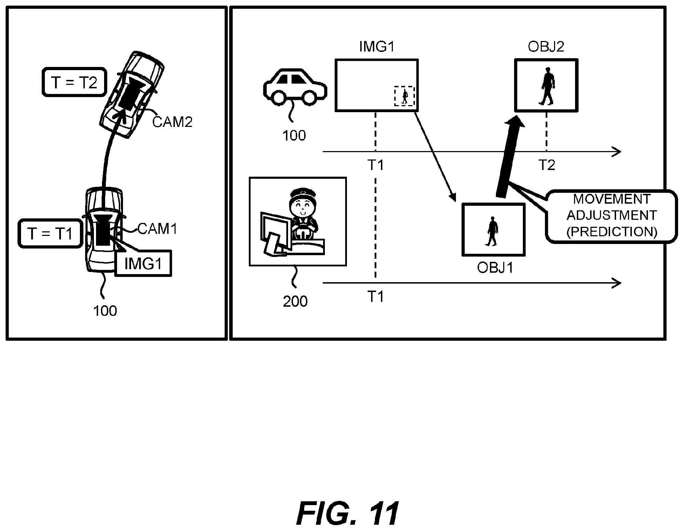

FIG. 11 is a conceptual diagram for illustrating an outline of the movement adjustment processing of the moving body by the remote support system 1. The image IMG1 is an image IMG actually captured at the timing T1 by the camera CAM mounted on the vehicle 100. The image IMG1 is transmitted from the vehicle 100 to the remote operator terminal 200. The remote operator terminal 200 predicts the relative movement amount of the moving body in the timing difference D2 shown in FIG. 4 by the optical flow.

The timing T2 shown in FIG. 11 is a timing to be a target of prediction, and is a timing after the timing T1. The difference between the timing T2 and the timing T1 corresponds to the movement adjustment time (the object adjustment time) of the moving body. When an predicted movement amount Lo of the moving body exceeds a movement threshold THLo, the remote support system 1 sets a time $\beta$ equal to or less than the timing difference D2 shown in FIG. 4 as the "object adjustment time", and performs the movement adjustment. Note that, as in the case of the movement threshold THLv, the movement threshold THLo can be set in advance as a movement amount at which it is expected that a deviation will occur between the position and size of the moving body indicated in the synthetic image SIMG1 and the actual position and size of the moving body.

When the movement adjustment of the moving body is performed, the remote operator terminal 200 extracts a partial image OBJ1 of the moving body from the image IMG1 acquired after the timing T1 based on the recognition

information OR. Then, a partial image OBJ2 of the moving body to be captured in the future is predicted from the partial image OBJ1 using the projection transformation.

The remote support system 1 acquires the camera information CINF regarding the camera CAM mounted on the vehicle 100. Then, a change in viewpoints of the camera CAM is estimated based on the installation information on the camera CAM included in the camera information CINF. The processing up to this point is the same as the movement adjustment processing of the vehicle 100 described in FIG. 5.

In the object movement adjustment processing, information on the relative movement of the moving body with respect to the vehicle 100 in the period from the timing T1 to the timing T2 (i.e., the object adjustment time) is acquired. For example, the remote support system 1 estimates the relative movement amount of the moving body from the timing T1 to the timing T2 by the optical flow. Then, the remote support system 1 calculates a difference between the first viewpoint and the second viewpoint based on the camera information CINF (the installation information) and the relative movement amount of the moving body at the object adjustment time. Based on the difference, the remote support system 1 converts the image IMG1 viewed from the first viewpoint into the image IMG2 viewed from the second viewpoint.

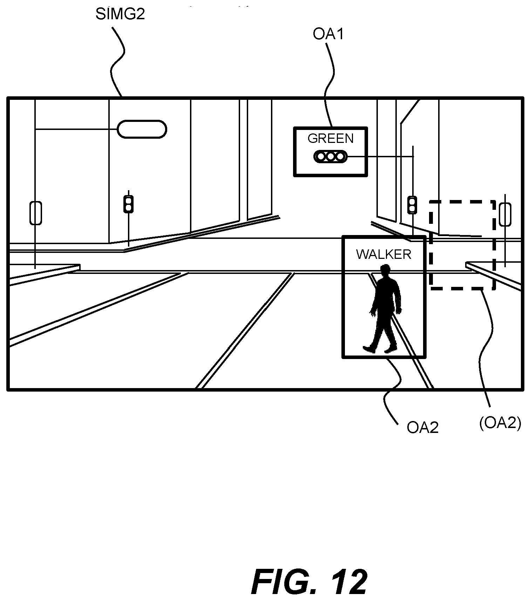

FIG. 12 is a diagram illustrating an example of the synthetic image SIMG output from the display device 220 when the projection transformation is performed on the partial image of the moving body. The annotation information OA1 and OA2 shown in FIG. 12 are the same as those described in FIGS. 3 and 7. What is important in the description of FIG. 12 is that the position and size (solid line) of the annotation information OA2 (the walker) are different from the position and size (broken line) of the annotation information OA2 shown in FIG. 7. This is because the projection transformation is performed on the partial image of the moving body.

The object adjustment time (time $\beta$) may be set to a time equal to the timing difference D2 or may be set to a time shorter than the timing difference D2. When the object adjustment time is set to a time shorter than the timing difference D2, the preliminary threshold (the projection transformation threshold) THpre (<THLo) smaller than the movement threshold THLo may be set based on the same concept as the preliminary threshold THpre described in FIGS. 9 and 10. In this case, the time $\beta$ may be set to be monotonically non-decreasing from zero to the timing difference D2 from the preliminary threshold THpre to the moving threshold THLo. Thus, the position and size of the moving body can be stabilized before and after the execution of the movement adjustment processing.

3-3. Combination of movement adjustment processing

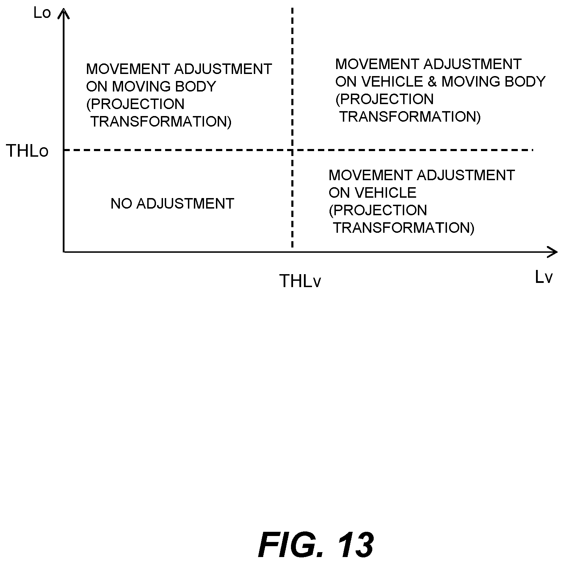

The movement adjustment processing of the vehicle 100 described in Section 3-1 and the movement adjustment processing of the moving body described in Section 3-2 may be performed in combination. FIG. 13 is a diagram illustrating a case where the movement adjustment processing of the vehicle 100 and the movement adjustment processing of the moving body are combined. As shown in FIG. 13, when the predicted movement amount Lv of the vehicle 100 is equal to or less than the movement threshold THLv and the predicted movement amount Lo of the moving body is equal to or less than the movement threshold THLo, the movement adjustment processing is not performed. On the other hand, when the predicted movement amount Lv exceeds the movement threshold THLv and the predicted movement amount Lo exceeds the movement threshold THLo, the movement adjustment processing of the vehicle 100 and the moving body is performed.

When the predicted movement amount Lv is equal to or less than the movement threshold THLv whereas the predicted movement amount Lo exceeds the movement threshold THLo, only the movement adjustment processing of the moving body is performed. When the predicted movement amount Lo is equal to or less than the movement threshold THLo whereas the predicted movement amount Lv exceeds the movement threshold THLv, only the movement adjustment processing of the vehicle 100 is performed. In this way, the above-described two kinds of movement adjustment processing can be appropriately executed based on the comparison between the predicted movement amount and the movement threshold.

4. Configuration example of vehicle

4-1. Configuration example

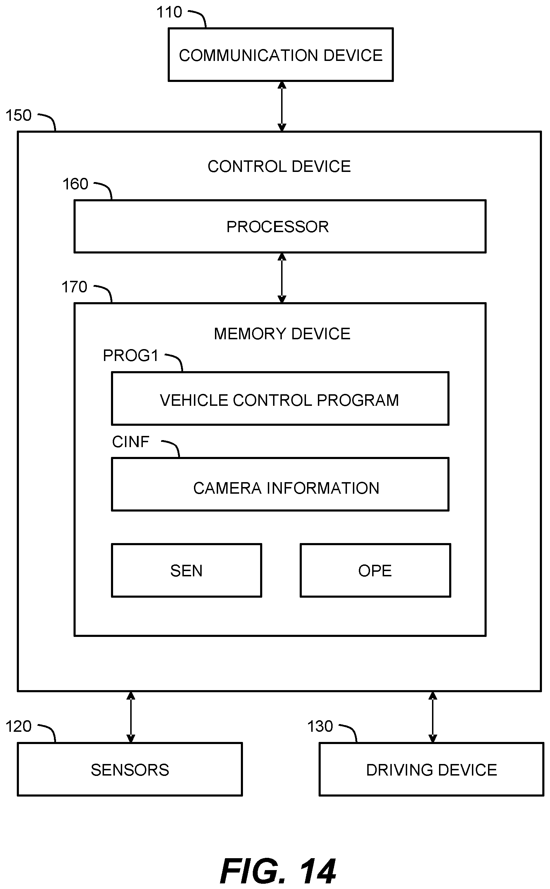

FIG. 14 is a block diagram showing a configuration example of the vehicle 100. The vehicle 100 includes a communication device 110, sensors 120, a driving device 130, and a control device 150.

The communication device 110 communicates with the outside of the vehicle 100. For example, the communication device 110 communicates with the remote operator terminal 200 or the management device 300.

The sensors 120 include a recognition sensor, a vehicle state sensor, a position sensor, and the like. The recognition sensor recognizes (detects) a situation around the vehicle 100. Examples of the recognition sensor include the camera CAM, a laser imaging detection and ranging (LIDAR), and a radar. The vehicle state sensor detects a state of the vehicle 100. The vehicle state sensor includes a speed sensor, an acceleration sensor, a yaw rate sensor, a steering angle

sensor, and the like. The position sensor detects the position and the orientation of the vehicle 100. For example, the position sensor includes a GNSS sensor.

The driving device 130 includes a steering device, a driving device, and a braking device. The steering device steers the wheels. For example, the steering device includes an electric power steering (EPS) device. The driving device is a power source that generates a driving force. Examples of the driving device include an engine, an electric motor, and an in-wheel motor. The braking device generates a braking force.

The control device 150 is a computer that controls the vehicle 100. The control device 150 includes one or more processors 160 (hereinafter, simply referred to as a "processor 160") and one or more memory devices 170 (hereinafter, simply referred to as a "memory device 170"). The processor 160 executes various processes. Examples of the processor 160 include a general-purpose processor, a special-purpose processor, a central processing unit (CPU), a graphics processing unit (GPU), an application specific integrated circuit (ASIC), a field-programmable gate array (FPGA), an integrated circuit, and / or combinations thereof. The memory device 170 stores various information. Examples of the memory device 170 include a volatile memory, a nonvolatile memory, a hard disk drive (HDD), and a solid state drive (SSD). The control device 150 may include one or more electronic control units (ECUs). In general, the control device 150 may also be referred to as processing circuitry.

The vehicle control program PROG1 is a computer program executed by the processor 160. The function of the control device 150 may be implemented by cooperation between the processor 160 that executes the vehicle control program PROG1 and the memory device 170. The vehicle control program PROG1 is stored in the memory device 170. Alternatively, the vehicle control program PROG1 may be recorded in computer-readable recording media.

4-2. Information on sensor detection

The control device 150 acquires the information on sensor detection SEN using the sensors 120. The information on sensor detection SEN is stored in the memory device 170. The information on sensor detection SEN includes the image IMG, vehicle status information, positional information, object information, and the like. The image IMG is captured by the camera CAM. The vehicle status information indicates the state (e.g., speed, steering angle, etc.) of the vehicle 100 detected by the vehicle state sensor. The positional information indicates the position and orientation of the vehicle 100 detected by the position sensor.

The object information is information about an object around the vehicle 100. Examples of the object around the vehicle 100 include a walker, a bicycle, a two wheeled vehicle, other vehicle (a preceding vehicle, a parallel driving vehicle, a following vehicle, and the like), a white lane, road construction (e.g., a curbstone, a guard rail), a pole, a traffic light, a mark, and the like. The control device 150 may recognize an object around the vehicle 100 by using the recognition sensor. For example, by analyzing the image IMG, an object can be identified and the relative position of the object can be calculated. In addition, it is also possible to identify an object based on the point group information obtained by the LIDAR and acquire the relative position and the relative speed of the object. The object information includes a relative position of the object with respect to the vehicle 100. The object information may further include a relative speed of the object.

4-3. Vehicle travel control

The control device 150 executes vehicle travel control for controlling the travel of the vehicle 100. The vehicle travel control includes steering control, drive control, and braking control. The control device 150 may perform vehicle driving control by controlling the driving device 130 (e.g., a steering device, a driving device, and a braking device).

The control device 150 may perform autonomous driving control based on the information on sensor detection SEN. More specifically, the control device 150 generates a driving plan of the vehicle 100 based on the information on sensor detection SEN. Further, the control device 150 generates a target trajectory required for the vehicle 100 to travel in accordance with the travel plan based on the information on sensor detection SEN. The target trajectory includes a target position and a target speed. Then, the control device 150 performs vehicle travel control so that the vehicle 100 follows the target trajectory.

4-4. Processing related to the remote support

When the remote support of the vehicle 100 is performed, the control device 150 communicates with the remote operator terminal 200 through the communication device 110.

The control device 150 transmits at least a part of the information on sensor detection SEN to the remote operator terminal 200. Typically, the control device 150 transmits the image IMG to the remote operator terminal 200. The control device 150 may transmit the vehicle status information to the remote operator terminal 200. The control device 150 may transmit the object information to the remote operator terminal 200.

The control device 150 receives the remote support information OPE from the remote operator terminal 200. The

remote support information OPE is information on remote support by the remote operator O. For example, the remote support information OPE includes an operation amount by the remote operator O. The control device 150 performs the vehicle travel control in accordance with the received remote support information OPE.

4-5. Camera information

The camera information CINF includes installation information and performance information on each of one or more camera CAMs mounted on the vehicle 100. The installation information indicates the installation position and the installation orientation of the camera CAM in the vehicle coordinate system. The performance information indicates the focal length, the angle of view, and the like of the camera CAM. The camera information CINF is stored in the memory device 170. The control device 150 may transmit the camera information CINF to the remote operator terminal 200.

5. Configuration example of the remote operator terminal

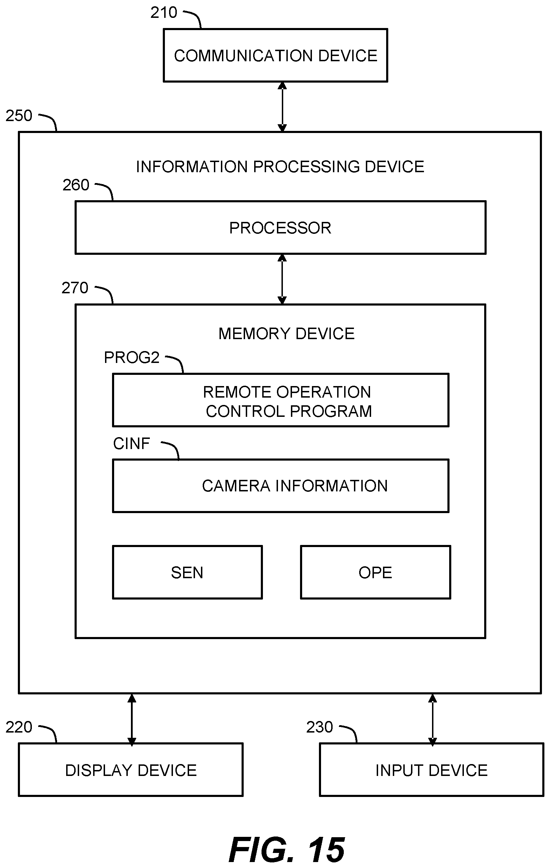

FIG. 15 is a block diagram illustrating an example of a configuration of the remote operator terminal 200. The remote operator terminal 200 includes a communication device 210, a display device 220, an input device 230, and an information processing device 250.

The communication device 210 may communicate with the vehicle 100 and the management device 300.

The display device 220 displays various information on the remote operator O performing the remote support. In other words, the display device 220 presents the various information to the remote operator O by displaying the various information.

The input device 230 is a member operated by the remote operator O when the remote operator O remotely supports the vehicle 100. For example, the input device 230 may include remote support members. Remote support members include a steering wheel, a gas pedal, a brake pedal, a turn signal, etc.

The information processing device 250 controls the remote operator terminal 200. The information processing device 250 includes one or more processors 260 (hereinafter, simply referred to as a "processor 260") and one or more memory devices 270 (hereinafter, simply referred to as a "memory device 270"). The processor 260 executes various processing. Examples of the processor 260 include a general purpose processor, an application specific processor, a CPU, a GPU, an ASIC, an FPGA, an integrated circuit, and / or combinations thereof. The memory device 270 stores various information. Examples of the memory device 270 include a volatile memory, a nonvolatile memory, an HDD, and an SSD. In general, the information processing device 250 may be referred to as processing circuitry.

The remote support control program PROG2 is a computer program executed by the processor 260. The processor 260 that executes the remote support control program PROG2 and the memory device 270 may cooperate to implement the function of the information processing device 250. The remote support control program PROG2 is stored in the memory device 270. Alternatively, the remote support control program PROG2 may be recorded in computer-readable recording media. The remote support control program PROG2 may be provided via a network.

The information processing device 250 communicates with the vehicle 100 via the communication device 210. The information processing device 250 receives the information on sensor detection SEN transmitted from the vehicle 100. The information processing device 250 presents necessary information in the received information on sensor detection SEN to the remote operator O. For example, the information processing device 250 presents the image IMG to the remote operator O by displaying the image IMG on the display device 220. The remote operator O can recognize the state of the vehicle 100 and the surrounding situation based on the presented information.

The remote operator O operates the input device 230. The operation amount of the input device 230 is detected by a sensor installed in the input device 230. The information processing device 250 generates remote support information OPE reflecting the operation amount of the input device 230 by the remote operator O. Then, the information processing device 250 transmits the remote support information OPE to the vehicle 100 via the communication device 210.

The information processing device 250 may receive the camera information CINF transmitted from the vehicle 100. The camera information CINF is stored in the memory device 270.

The information processing device 250 performs the projection transformation processing (the movement adjustment processing) described in the above section 3 and the generation processing of the synthetic image described in the above section 2. The speed and steering angle of the vehicle 100 are obtained from information on sensor detection SEN. The steering angle in the steering operation by the remote operator O may be regarded as the steering angle of the vehicle 100. The installation information and the performance information on each camera CAM mounted on the vehicle 100 are obtained from the camera information CINF. The information processing device 250 executes the projection transformation processing (the movement adjustment processing) described in the above section 3 based on these pieces of information.

## Claims

1. A device (1) for remotely supporting a mobile vehicle (100), the device configured to remotely support the mobile vehicle by outputting a synthetic image (SIMG) in which annotation information (OR) about an object to be noted in an image (IMG) is superimposed on the image obtained by a camera (CAM) mounted on the mobile vehicle from a display device (220), the device comprising

   a communication circuitry (210) connected to the mobile vehicle via a communication network; and
   a processing circuitry (250) coupled to the communication circuitry,
   wherein the communication circuitry is configured to:

      receive, from the mobile vehicle, image data obtained by encoding the image and information on acquisition timing of the image by the camera; and
      receive, from the mobile vehicle, object data including recognition information on an object in the image separately from the image data,
      wherein the processing circuitry is configured to:

         predict a movement amount of the mobile vehicle in an image delay time indicating a timing difference between an acquisition timing of the image included in the image data and a decoding timing of the image data by the processing circuitry;
         set a mobile vehicle adjustment time ($\alpha$) equal to or less than the image delay time when the predicted movement amount (Lv) of the mobile vehicle exceeds a movement threshold (THLv); and
         generate the synthetic image by projection transformation of the image included in the image data into a future image obtained at a camera viewpoint later than the acquisition timing of the image by the mobile vehicle adjustment time based on information regarding a movement of the mobile vehicle when the predicted movement amount of the mobile vehicle exceeds the movement threshold.

2. The remote support device according to claim 1,
   wherein the processing circuitry is configured to:

   start projection transformation of the image to the future image based on the information regarding the movement of the mobile vehicle when the predicted movement amount of the mobile vehicle exceeds a projection transformation threshold that is lower than the movement threshold; and
   gradually increase the mobile vehicle adjustment time from zero to the image delay time as the predicted movement amount of the mobile vehicle increases from the projection transformation threshold to the movement threshold.

3. The remote support device according to claim 1,
   wherein the processing circuitry is configured to:

   calculate the predicted movement amount of the mobile vehicle for each of a longitudinal direction of the mobile vehicle and a horizontal direction of the mobile vehicle; and
   perform the projection transformation of the image into the future image based on the information regarding the movement of the mobile vehicle when at least one of the predicted movement amount of the mobile vehicle in the longitudinal direction and the predicted movement amount of the mobile vehicle in the horizontal direction exceeds the movement threshold.

4. The remote support device according to claim 1,

   wherein the recognition information on the object includes the information on image acquisition timing used for recognizing the object, and
   wherein the processing circuitry is further configured to:

      when the object is a moving body, predict a relative movement amount of the moving body with respect to the mobile vehicle at an object delay time indicating a timing difference between the acquisition timing of the image used for recognizing the moving body and a reception timing of the object data by the processing circuitry;
      set an object adjustment time ($\beta$) equal to or less than the object delay time when the predicted relative

movement amount of the moving body exceeds a relative movement threshold; and
when the predicted relative movement amount of the moving body exceeds the relative movement threshold, generate the synthetic image by performing projection transformation of a partial image of the moving body included in the image included in the image data and used for recognizing the moving body into a future partial image obtained at a camera viewpoint later than an acquisition timing of the image by the object adjustment time, based on the information regarding the relative movement of the moving body with respect to the mobile vehicle.

**5.** The remote support device according to claim 4,
wherein the processing circuitry is configured to:

when the predicted relative movement amount of the moving body exceeds a projection transformation threshold that is lower than the relative movement threshold, start projection transformation of the partial image into the future partial image based on the information on the relative movement of the moving body; and
gradually increase the object adjustment time from zero to the object delay time as the predicted relative movement amount of the moving body increases from the projection transformation threshold to the relative movement threshold.

**6.** The remote support device according to claim 4 or 5,
wherein the processing circuitry is configured to:

calculate a predicted relative movement amount of the moving body for each of a longitudinal direction of the mobile vehicle and a horizontal direction of the mobile vehicle; and
perform projection transformation of the partial image into the future partial image based on the information on the relative movement of the moving body when at least one of the predicted relative movement amount of the moving body in the longitudinal direction and the predicted movement amount of the moving body in the horizontal direction exceeds the relative movement threshold.

**7.** A method for remotely supporting a mobile vehicle (100), the method including remotely supporting the mobile vehicle by outputting, from a display device (220), a synthetic image (SIMG) in which annotation information (OR) about an object to be noted in an image (IMG) is superimposed on the image obtained by a camera (CAM) mounted in the mobile vehicle,
wherein the method includes:

receiving from the mobile vehicle image data in which the image and information on acquisition timing of the image by the camera are encoded from the mobile vehicle;
receiving object data including recognition information on an object in the image from the mobile vehicle separately from the image data;
predicting a movement amount of the mobile vehicle at an image delay time indicating a timing difference between an acquisition timing of the image included in the image data and a decoding timing of the image data;
setting a mobile vehicle adjustment time ($\alpha$) equal to or less than the image delay time when the predicted movement amount (Lv) of the mobile vehicle exceeds a movement threshold (THLv); and
generating the synthetic image by projection transforming the image included in the image data into a future image obtained at a camera viewpoint later than the acquisition timing of the image by the mobile vehicle adjustment time based on information regarding a movement of the mobile vehicle when the predicted movement amount of the mobile vehicle exceeds a movement threshold.

## Patentansprüche

**1.** Vorrichtung (1) zur Fernunterstützung eines Mobilfahrzeugs (100), wobei die Vorrichtung zur Fernunterstützung des Mobilfahrzeugs durch Ausgeben eines synthetischen Bildes (SIMG), in dem Anmerkungsinformationen (OR) über ein in einem Bild (IMG) zu vermerkendes Objekt dem durch eine an dem Mobilfahrzeug montierte Kamera (CAM) erhaltenen Bild überlagert werden, aus einer Anzeigevorrichtung (220) ausgelegt ist, wobei die Vorrichtung Folgendes umfasst

eine Kommunikationsschaltung (210), die über ein Kommunikationsnetzwerk mit dem Mobilfahrzeug verbunden ist; und

eine Verarbeitungsschaltung (250), die mit der Kommunikationsschaltung gekoppelt ist, wobei die Verarbeitungsschaltung zu Folgendem ausgelegt ist:

Empfangen, von dem Mobilfahrzeug, von durch Codieren des Bildes erhaltenen Bilddaten und Informationen über einen Erfassungszeitpunkt des Bildes durch die Kamera; und
Empfangen, von dem Mobilfahrzeug, von Objektdaten mit Erkennungsinformationen über ein Objekt in dem Bild getrennt von den Bilddaten,
wobei die Verarbeitungsschaltung zu Folgendem ausgelegt ist:

Vorhersagen eines Bewegungsbetrags des Mobilfahrzeugs in einer Bildverzögerungszeit, die eine Zeitdifferenz zwischen einem Erfassungszeitpunkt des in den Bilddaten enthaltenen Bildes und einem Decodierungszeitpunkt der Bilddaten durch die Verarbeitungsschaltung angibt;
Einstellen einer Mobilfahrzeuganpassungszeit ($\alpha$) gleich oder kleiner als die Bildverzögerungszeit, wenn der vorhergesagte Bewegungsbetrag (Lv) des Mobilfahrzeugs eine Bewegungsschwelle (THLv) überschreitet; und
Erzeugen des synthetischen Bildes durch eine Projektionstransformation des in den Bilddaten enthaltenen Bildes in ein zukünftiges Bild, das in einem Kamerablickwinkel erhalten wird, der um die Mobilfahrzeuganpassungszeit später als der Erfassungszeitpunkt des Bildes ist, basierend auf Informationen bezüglich einer Bewegung des Mobilfahrzeugs, wenn der vorhergesagte Bewegungsbetrag des Mobilfahrzeugs die Bewegungsschwelle überschreitet.

**2.** Fernunterstützungsvorrichtung nach Anspruch 1,
wobei die Verarbeitungsschaltung zu Folgendem ausgelegt ist:

Starten einer Projektionstransformation des Bildes zu dem zukünftigen Bild basierend auf den Informationen bezüglich der Bewegung des Mobilfahrzeugs, wenn der vorhergesagte Bewegungsbetrag des Mobilfahrzeugs eine Projektionstransformationsschwelle überschreitet, die niedriger als die Bewegungsschwelle ist; und
allmähliches Erhöhen der Mobilfahrzeuganpassungszeit von Null auf die Bildverzögerungszeit, während sich der vorhergesagte Bewegungsbetrag des Mobilfahrzeugs von der Projektionstransformationsschwelle auf die Bewegungsschwelle erhöht.

**3.** Fernunterstützungsvorrichtung nach Anspruch 1,
wobei die Verarbeitungsschaltung zu Folgendem ausgelegt ist:

Berechnen des vorhergesagten Bewegungsbetrags des Mobilfahrzeugs für jeweils eine Längsrichtung des Mobilfahrzeugs und eine horizontale Richtung des Mobilfahrzeugs; und
Durchführen der Projektionstransformation des Bildes in das zukünftige Bild basierend auf den Informationen bezüglich der Bewegung des Mobilfahrzeugs, wenn der vorhergesagte Bewegungsbetrag des Mobilfahrzeugs in der Längsrichtung und/oder der vorhergesagte Bewegungsbetrag des Mobilfahrzeugs in der horizontalen Richtung die Bewegungsschwelle überschreitet.

**4.** Fernunterstützungsvorrichtung nach Anspruch 1,

wobei die Erkennungsinformationen über das Objekt die Informationen über einen Bilderfassungszeitpunkt enthalten, der zum Erkennen des Objekts verwendet wird, und
wobei die Verarbeitungsschaltung ferner zu Folgendem ausgelegt ist:

wenn das Objekt ein sich bewegender Körper ist, Vorhersagen eines relativen Bewegungsbetrags des sich bewegenden Körpers in Bezug auf das Mobilfahrzeug zu einer Objektverzögerungszeit, die eine Zeitdifferenz zwischen dem Erfassungszeitpunkt des Bildes, der zum Erkennen des sich bewegenden Körpers verwendet wird, und einem Empfangszeitpunkt der Objektdaten durch die Verarbeitungsschaltung angibt;
Einstellen einer Objektanpassungszeit ($\beta$) gleich oder kleiner als die Objektverzögerungszeit, wenn der vorhergesagte relative Bewegungsbetrag des sich bewegenden Körpers eine relative Bewegungsschwelle überschreitet; und
wenn der vorhergesagte relative Bewegungsbetrag des sich bewegenden Körpers die relative Bewegungsschwelle überschreitet, Erzeugen des synthetischen Bildes durch Durchführen einer Projektionstransformation eines Teilbildes des sich bewegenden Körpers, das in dem in den Bilddaten enthaltenen Bild enthalten ist und zum Erkennen des sich bewegenden Körpers verwendet wird, in ein zukünftiges Teilbild,

das in einem Kamerablickwinkel erhalten wird, der um die Objektanpassungszeit später als ein Erfassungszeitpunkt des Bildes ist, basierend auf den Informationen bezüglich der relativen Bewegung des sich bewegenden Körpers in Bezug auf das Mobilfahrzeug.

**5.** Fernunterstützungsvorrichtung nach Anspruch 4,
wobei die Verarbeitungsschaltung zu Folgendem ausgelegt ist:

wenn der vorhergesagte relative Bewegungsbetrag des sich bewegenden Körpers eine Projektionstransformationsschwelle überschreitet, die niedriger als die relative Bewegungsschwelle ist, Starten einer Projektionstransformation des Teilbildes in das zukünftige Teilbild basierend auf den Informationen über die relative Bewegung des sich bewegenden Körpers; und
allmähliches Erhöhen der Objektanpassungszeit von Null auf die Objektverzögerungszeit, während sich der vorhergesagte relative Bewegungsbetrag des sich bewegenden Körpers von der Projektionstransformationsschwelle auf die relative Bewegungsschwelle erhöht.

**6.** Fernunterstützungsvorrichtung nach Anspruch 4 oder 5,
wobei die Verarbeitungsschaltung zu Folgendem ausgelegt ist:

Berechnen eines vorhergesagten relativen Bewegungsbetrags des sich bewegenden Körpers für jeweils eine Längsrichtung des Mobilfahrzeugs und eine horizontale Richtung des Mobilfahrzeugs; und
Durchführen einer Projektionstransformation des Teilbildes in das zukünftige Teilbild basierend auf den Informationen über die relative Bewegung des sich bewegenden Körpers, wenn der vorhergesagte relative Bewegungsbetrag des sich bewegenden Körpers in der Längsrichtung und/oder der vorhergesagte Bewegungsbetrag des sich bewegenden Körpers in der horizontalen Richtung die relative Bewegungsschwelle überschreitet.

**7.** Verfahren zur Fernunterstützung eines Mobilfahrzeugs (100), wobei das Verfahren eine Fernunterstützung des Mobilfahrzeugs durch Ausgeben, aus einer Anzeigevorrichtung (220), eines synthetischen Bildes (SIMG), in dem Anmerkungsinformationen (OR) über ein in einem Bild (IMG) zu vermerkendes Objekt dem durch eine in dem Mobilfahrzeug montierte Kamera (CAM) erhaltenen Bild überlagert werden, umfasst,
wobei das Verfahren Folgendes umfasst:

Empfangen, von dem Mobilfahrzeug, von Bilddaten, in denen das Bild und Informationen über den Erfassungszeitpunkt des Bildes durch die Kamera von dem Mobilfahrzeug codiert sind;
Empfangen von Objektdaten mit Erkennungsinformationen über ein Objekt in dem Bild von dem Mobilfahrzeug getrennt von den Bilddaten;
Vorhersagen eines Bewegungsbetrags des Mobilfahrzeugs zu einer Bildverzögerungszeit, die eine Zeitdifferenz zwischen einem Erfassungszeitpunkt des in den Bilddaten enthaltenen Bildes und einem Decodierungszeitpunkt der Bilddaten angibt;
Einstellen einer Mobilfahrzeuganpassungszeit ($\alpha$) gleich oder kleiner als die Bildverzögerungszeit, wenn der vorhergesagte Bewegungsbetrag (Lv) des Mobilfahrzeugs eine Bewegungsschwelle (THLv) überschreitet; und
Erzeugen des synthetischen Bildes durch eine Projektionstransformation des in den Bilddaten enthaltenen Bildes in ein zukünftiges Bild, das in einem Kamerablickwinkel erhalten wurde, der um die Mobilfahrzeuganpassungszeit später als der Erfassungszeitpunkt des Bildes ist, basierend auf Informationen bezüglich einer Bewegung des Mobilfahrzeugs, wenn der vorhergesagte Bewegungsbetrag des Mobilfahrzeugs eine Bewegungsschwelle überschreitet.

## Revendications

**1.** Dispositif (1) d'assistance à distance d'un véhicule mobile (100), le dispositif étant configuré pour assister à distance le véhicule mobile en fournissant en sortie, depuis un dispositif d'affichage (220), une image synthétique (SIMG) dans laquelle des informations d'annotation (OR) concernant un objet à prendre en compte dans une image (IMG) sont superposées à l'image obtenue par une caméra (CAM) montée sur le véhicule mobile, le dispositif comprenant

une circuiterie de communication (210) connectée au véhicule mobile par l'intermédiaire d'un réseau de communication ; et
une circuiterie de traitement (250) couplée à la circuiterie de communication,
dans lequel la circuiterie de communication est configurée pour :

recevoir, depuis le véhicule mobile, des données d'image obtenues par codage de l'image et des informations sur un instant d'acquisition de l'image par la caméra ; et
recevoir, depuis le véhicule mobile, des données d'objet comportant des informations de reconnaissance sur un objet dans l'image séparément des données d'image,
dans lequel la circuiterie de traitement est configurée pour :

prédire une quantité de déplacement du véhicule mobile dans une durée de décalage temporel d'image indiquant une différence de temps entre un instant d'acquisition de l'image comprise dans les données d'image et un instant de décodage des données d'image par la circuiterie de traitement ;
définir une durée d'ajustement de véhicule mobile ($\alpha$) inférieure ou égale à la durée de décalage d'image lorsque la quantité de déplacement prédite (Lv) du véhicule mobile dépasse un seuil de déplacement (THLv) ; et
générer l'image synthétique par transformation par projection de l'image comprise dans les données d'image en une image future obtenue à un point de vue de caméra à un instant postérieur à l'instant d'acquisition de l'image d'une durée correspondant à la durée d'ajustement de véhicule mobile sur la base d'informations concernant un déplacement du véhicule mobile lorsque la quantité de déplacement prédite du véhicule mobile dépasse le seuil de déplacement.

**2.** Dispositif d'assistance à distance selon la revendication 1,
dans lequel la circuiterie de traitement est configurée pour :

déclencher la transformation par projection de l'image en l'image future sur la base des informations concernant le déplacement du véhicule mobile lorsque la quantité de déplacement prédite du véhicule mobile dépasse un seuil de transformation par projection inférieur au seuil de déplacement ; et
augmenter progressivement la durée d'ajustement de véhicule mobile de zéro jusqu'à la durée de décalage temporel d'image à mesure que la quantité de déplacement prédite du véhicule mobile augmente du seuil de transformation par projection jusqu'au seuil de déplacement.

**3.** Dispositif d'assistance à distance selon la revendication 1,
dans lequel la circuiterie de traitement est configurée pour :

calculer la quantité de déplacement prédite du véhicule mobile pour chacune d'une direction longitudinale du véhicule mobile et d'une direction horizontale du véhicule mobile ; et
réaliser la transformation par projection de l'image en l'image future sur la base des informations concernant le déplacement du véhicule mobile lorsqu'au moins l'une de la quantité de déplacement prédite du véhicule mobile dans la direction longitudinale et de la quantité de déplacement prédite du véhicule mobile dans la direction horizontale dépasse le seuil de déplacement.

**4.** Dispositif d'assistance à distance selon la revendication 1,

dans lequel les informations de reconnaissance sur l'objet comportent les informations sur l'instant d'acquisition d'image utilisées pour la reconnaissance de l'objet, et
dans lequel la circuiterie de traitement est en outre configurée pour :

lorsque l'objet est un corps en mouvement, prédire une quantité de déplacement relatif du corps en déplacement par rapport au véhicule mobile dans une durée de décalage temporel d'objet indiquant une différence de temps entre l'instant d'acquisition de l'image utilisée pour la reconnaissance du corps en mouvement et un instant de réception des données d'objet par la circuiterie de traitement ;
définir une durée d'ajustement d'objet ($\beta$) inférieure ou égale à la durée de décalage temporel d'objet lorsque la quantité de déplacement relatif prédite du corps en mouvement dépasse un seuil de déplacement relatif ; et
lorsque la quantité de déplacement relatif prédite du corps en mouvement dépasse le seuil de déplacement relatif, générer l'image synthétique en réalisant une transformation par projection d'une image partielle du corps en mouvement comprise dans l'image comprise dans les données d'image et utilisée pour la reconnaissance du corps en mouvement en une image partielle future obtenue à un point de vue de la caméra à un instant postérieur à un instant d'acquisition de l'image d'une durée correspondant à la durée d'ajustement d'objet, sur la base des informations concernant le déplacement relatif du corps en mouvement par rapport au véhicule mobile.

**5.** Dispositif d'assistance à distance selon la revendication 4, dans lequel la circuiterie de traitement est configurée pour :

lorsque la quantité de déplacement relatif prédite du corps en mouvement dépasse un seuil de transformation par projection inférieur au seuil de déplacement relatif, déclencher une transformation par projection de l'image partielle en l'image partielle future sur la base des informations sur le déplacement relatif du corps en mouvement ; et

augmenter progressivement la durée d'ajustement d'objet de zéro jusqu'à la durée de décalage temporel d'objet à mesure que la quantité de déplacement relatif prédite du corps en mouvement augmente du seuil de transformation par projection jusqu'au seuil de déplacement relatif.

**6.** Dispositif d'assistance à distance selon la revendication 4 ou 5, dans lequel la circuiterie de traitement est configurée pour :

calculer une quantité de déplacement relatif prédite du corps en mouvement pour chacune d'une direction longitudinale du véhicule mobile et d'une direction horizontale du véhicule mobile ; et

réaliser une transformation par projection de l'image partielle en l'image partielle future sur la base des informations sur le déplacement relatif du corps en mouvement lorsqu'au moins l'une de la quantité de déplacement relatif prédite du corps en mouvement dans la direction longitudinale et de la quantité de déplacement relatif prédite du corps en mouvement dans la direction horizontale dépasse le seuil de déplacement relatif.

**7.** Procédé d'assistance à distance d'un véhicule mobile (100), le procédé comportant l'assistance à distance du véhicule mobile par fourniture en sortie, depuis un dispositif d'affichage (220), d'une image synthétique (SIMG) dans laquelle des informations d'annotation (OR) concernant un objet à prendre en compte dans une image (IMG) sont superposées à l'image obtenue par une caméra (CAM) montée sur le véhicule mobile, le procédé comportant :

la réception, depuis le véhicule mobile, de données d'image dans lesquelles sont codées l'image et des informations sur un instant d'acquisition de l'image par la caméra depuis le véhicule mobile ;

la réception, depuis le véhicule, de données d'objet comportant des informations de reconnaissance sur un objet dans l'image séparément des données d'image ;

la prédiction d'une quantité de déplacement du véhicule mobile dans une durée de décalage temporel d'image indiquant une différence de temps entre un instant d'acquisition de l'image comprise dans les données d'image et un instant de décodage des données d'image ;

la définition d'une durée d'ajustement de véhicule mobile ($\alpha$) inférieure ou égale à la durée de décalage d'image lorsque la quantité de déplacement prédite (Lv) du véhicule mobile dépasse un seuil de déplacement (THLv) ; et

la génération de l'image synthétique par transformation par projection de l'image comprise dans les données d'image en une image future obtenue à un point de vue de caméra à un instant postérieur à l'instant d'acquisition de l'image d'une durée correspondant à la durée d'ajustement de véhicule mobile sur la base d'informations concernant un déplacement du véhicule mobile lorsque la quantité de déplacement prédite du véhicule mobile dépasse un seuil de déplacement.

300
MANAGEMENT DEVICE
SEN
(IMG, OR)
OPE
SEN
(IMG, OR)
OPE
O
CAM
SEN (IMG, OR)
OPE
100
220
200

*FIG. 1*

OBJECT RECOGNITION INFORMATION
IMG1 T1a
OR T1a
IMG1 T1b
OR T1b
IMG1 T1c
OR T1c
. . .
100
T1a
T1b
T1c
IMG1 T1a
OR T1a
IMG1 T1b
OR T1b
IMG1 T1c
OR T1c
. . .
SIMG1 T1a
OA T1a
SIMG1 T1b
OA T1b
SIMG1 T1c
OA T1c
200
T1a
OBJECT ANNOTATION INFORMATION

*FIG. 2*

SIMG1
OA1
GREEN
WALKER
OA2

FIG. 3

D1
IMG1
OBTAIN
ENCODING
SENDING
RECEIVING
DECODING
GENE
RATE
SIMG1
D2
OR
GENERATE
SENDING
RECEIVING
T1
T4
T3

FIG. 4

T = T2
CAM2
T = T1
CAM1
IMG1
100
IMG1
IMG2
100
T1
T2
MOVEMENT
ADJUSTMENT
(PREDICTION)
IMG1
200
T1

*FIG. 5*

<PERSPECTIVE PROJECTION TRANSFORMATION>
(WORLD COORDINATE SYSTEM)
P: PROJECTION PLANE
(IMAGE COORDINATE SYSTEM
CAM

$(x, y)$
$(x', y')$
IMAGE COORDINATE FROM CAM1 (FIRST VIEWPOINT)
IMAGE COORDINATE FROM CAM2 (SECOND VIEWPOINT)

$$\begin{bmatrix} x' \\ y' \\ 1 \end{bmatrix} = \boldsymbol{H} \begin{bmatrix} x \\ y \\ 1 \end{bmatrix}$$

$\boldsymbol{H}$ : PROJECTION TRANSFORMATION MATRIX

*FIG. 6*

SIMG2
OA1
GREEN
WALKER
OA2

FIG. 7

α
D1
0
THLv
Lv

*FIG. 8*

α
D1
0
THpre
THLv
Lv

*FIG. 9*

α
D1
0
THpre
THLv
Lv

FIG. 10

T = T2
CAM2
T = T1
CAM1
IMG1
100
IMG1
OBJ2
100
T1
T2
MOVEMENT
ADJUSTMENT
(PREDICTION)
OBJ1
200
T1

*FIG. 11*

SIMG2
OA1
GREEN
WALKER
OA2
(OA2)

FIG. 12

Lo
MOVEMENT ADJUSTMENT ON MOVING BODY (PROJECTION TRANSFORMATION)
MOVEMENT ADJUSTMENT ON VEHICLE & MOVING BODY (PROJECTION TRANSFORMATION)
THLo
NO ADJUSTMENT
MOVEMENT ADJUSTMENT ON VEHICLE (PROJECTION TRANSFORMATION)
THLv
Lv

*FIG. 13*

110
COMMUNICATION DEVICE
150
CONTROL DEVICE
160
PROCESSOR
170
MEMORY DEVICE
PROG1
VEHICLE CONTROL PROGRAM
CINF
CAMERA INFORMATION
SEN
OPE
120
SENSORS
130
DRIVING DEVICE

FIG. 14

210
COMMUNICATION DEVICE
250
INFORMATION PROCESSING DEVICE
260
PROCESSOR
270
MEMORY DEVICE
PROG2
REMOTE OPERATION CONTROL PROGRAM
CINF
CAMERA INFORMATION
SEN
OPE
220
DISPLAY DEVICE
230
INPUT DEVICE

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022159912 A
- US 2022321841 A1
- US 2019361436 A1
- US 2011066262 A1
- US 2021381197 A1


### Non-patent literature cited in the description


- **KOUDAI MATSUBARA** ; **MANABU OMAE**. Compensation of Camera Image Latency in Remotely Operated Vehicle using Projection Transformation. *19th ITS Symposium 2021,4-A-12*, December 2021